# EUROPEAN PATENT SPECIFICATION

(11) **EP 1 332 640 B1**
(45) Date of publication and mention of the grant of the patent: **21.02.2007**
(21) Application number: 01973497.9
(22) Date of filing: 26.09.2001
(51) Int. Cl.: H04Q 7/38, H04L 12/56

(54) **METHOD AND SYSTEM FOR UPLINK SCHEDULING OF PACKET DATA TRAFFIC IN WIRELESS SYSTEM**
VERFAHREN UND SYSTEM ZUR AUFWÄRTSPLANUNG VON PAKETDATENVERKEHR IN DRAHLOSEN SYSTEMEN
PROCEDE ET SYSTEME DESTINES A GERER LE TRAFIC DE PAQUETS DE DONNEES A LIAISON MONTANTE DANS UN SYSTEME SANS FIL

(30) Priority: 07.11.2000 US 246099 P; 16.01.2001 US 759153
(43) Date of publication of application: 06.08.2003
(73) Proprietor: Nokia Corporation, 02150 Espoo (FI)
(72) Inventor: NAIM, Ghassan, Garland, TX 75044 (US); KAKANI, Naveen, Denton, TX 76201 (US); HUOVINEN, Lasse, Irving, TX 75038 (US); CLANTON, Chris, Richardson, TX 75082 (US)
(74) Representative: Becker Kurig Straus
(86) International application number: PCT/US2001/029959
(87) International publication number: WO 2002/039760

(56) References cited:
- EP-A- 0 981 229

## Description

### TECHNICAL FIELD

This invention relates generally to a method and a system for allocating resources for data streams and more particularly to a method and a system for allocating transmission resources in a wireless system where the data includes an indication of its own resource needs.

### BACKGROUND ART

In networks and other arrangements, a situation often develops where a limited number of resources, such as bandwidth must be shared among a plurality of links. In particular, in a wireless type network, a number of mobile stations may be connected to a base station by wireless connections. Each base station may have only a limited number of channels to make these connections. Since many such mobile devices now utilize more than basic voice data, the amount of data which flows can vary substantially. Thus in addition to voice communications, wireless devices may include real time video, e-mail, web based information, etc. In order to fairly allocate the resources available, it is necessary for the base station to make some judgment as to which mobile stations can utilize the channels.

The simplest arrangement, and one used largely in the past for voice data, is merely to dedicate a single channel for a single mobile station as long as it is connected. Only the assigned mobile station can use the channel. Depending on the original request, it is possible to assign more than a single channel but these multiple channels remain dedicated to that mobile station until the connection is terminated. No information is shared about the instantaneous amount of data waiting in the mobile station.

Another manner of handling the situation is to utilize a polling scheme where the base station polls each mobile station to learn the status of the data queue in each mobile station. This allows the base station to determine how to share the bandwidth resources among the different mobile stations. Thus, when polled the mobile station can send a response indicating whether it has data to transmit. For example, in a global system for mobile devices (GSM) time division multiple access (TDMA) system, the transmission opportunity for a mobile station is granted n frames after the base station receives the polling response from the mobile station, where n is the number of frames required to transmit a data block in the channel. Thus, there is a delay of multiple frames after polling, before an adjustment can be made.

Unfortunately, real time traffic such as video conference has unpredictable fluctuations in the data rate. Thus, any delay in adjusting the resources may mean that a link to a mobile station may not always have data in its transmission queue.

Since a dedicated channel assignment scheme does not allow any other mobile stations to use the channel when the assigned mobile station uplink queue is empty, the bandwidth assigned will not be used, which lowers overall spectrum efficiency. This leads to poor bandwidth utilization which will only get worse as the number of connections in the system increases. Also, during high data rate periods, the number of real time packets waiting in the uplink queue will increase. Due to the limited bandwidth share assigned to the mobile station, packet congestion can occur and an increasing number of packets can exceed their delay requirements.

While the polling scheme is more efficient than a dedicated channel assignment scheme from the perspective of bandwidth utilization, some bandwidth is still wasted because the mobile station cannot send actual data when sending a polled response. As polling becomes more frequency, more bandwidth is wasted. Further, additional delay is introduced because the packet has to wait while the poll is received and answered. Thus, the delay will further slow down transmission and counteracts any benefits gained by the polling.

US-A-6 097 733 teaches a communication system that includes a base station and a plurality of wireless mobile units. The system includes a bandwith allocator that selectively allocates bandwith in response to wireless multimedia communication requirements to achieve a minimum transmission rate for multimedia communication.

EP-A-0 981 229 relates to a method and an apparatus for controlling asymmetric dynamic radio bearers in a mobile packet data communications system. The data rate in the mobile packet data communications system can be varied by activating only a part of the plurality of radio bearers having a predetermined data rate; examining the amount of data stored in a transmit buffer during transmission of mobile packet data; and transmitting the mobile packet data with the number of radio bearers increased or decreased according the the amount of data. Thus, the system examines the amount of data stored in the transmit buffer. However, the increase and/or decrease of the number of radio bearers used for communication has to be negotiated between the participating devices, which involves an undesired delay of the ressource allocation.

The object of the present invention is to overcome the disasvantages of known methodologies including dedicated channel assignmant and polling scheme for bandwith assignment.

### DISCLOSURE OF INVENTION

The object of the present invention is solved by a method and system, which provide for allocation of transmission resources between a first and a second network element in communication via a communications system having allocatable communication resources. A length of a data queue in the first network device is monitored as an indication of future need of communication resources in this first network element. The indication is sent from the first network element to a controller, which exercises control over the communication resource allocation. The indication is a coded value of the length of the data queue monitored. The communication resources are controlled by the controller in that the allocation of the communication resources between the first network element and the second network element is allocated based on this indication.

Briefly, this invention is achieved by using a plurality of bits in each data segment to describe the size of the queue in that station. Once this is received in the base station, additional resources can be allocated if necessary.

A more complete appreciation of the invention and many of the attendant advantages thereof will be readily obtained as the same becomes better understood by reference to the following detailed description when considered in connection with the accompanying drawings, wherein:

### BRIEF DESCRIPTION OF DRAWINGS

Figure 1 is a schematic diagram showing the arrangement of the present system;
Figure 2 is a block diagram showing a mobile station according to the present invention;
Figure 3 is a block diagram showing a base station according to the present invention;
Figure 4 is a flow chart showing the method of determining the queue length; and
Figure 5 is a flowchart showing the method of utilizing the information.

### BEST MODE FOR CARRYING OUT THE INVENTION

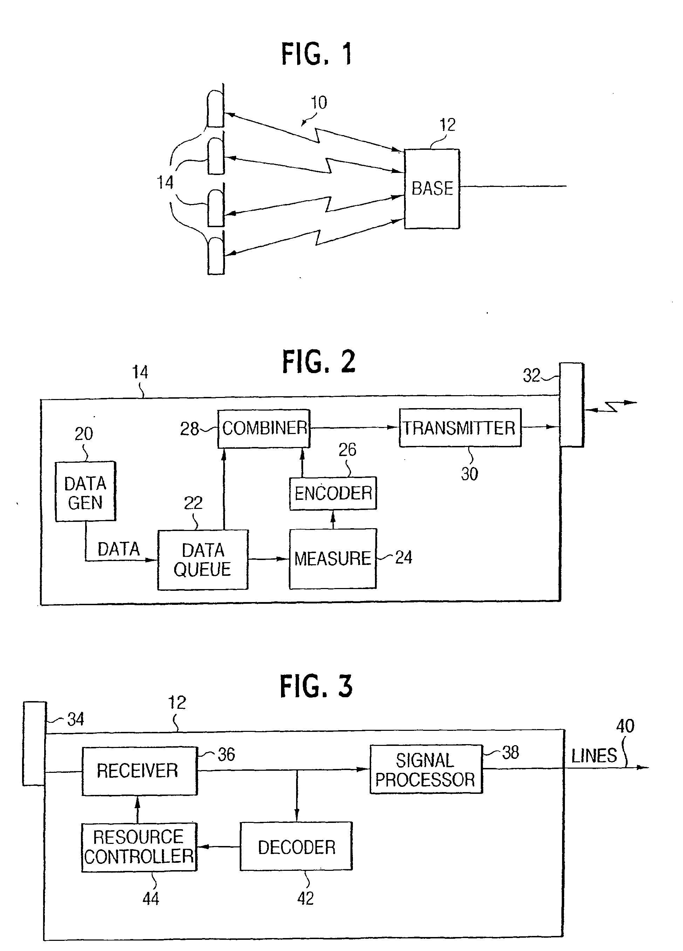

Referring now to the drawings, wherein like reference numerals designate identical or corresponding parts throughout the several views and more particularly to Figure 1 thereof, wherein the wireless system 10 is shown as including a base station 12 and mobile stations 14. As indicated in the figure, the individual mobile stations may be connected to the base station by wireless connections. Since the base station is allowed to use only a certain range of frequencies, there is limit to the bandwidth available to the mobile stations. Since this resource is limited, it is necessary to allocate this bandwidth so that the greatest amount of data can be moved in the shortest time. This improves the quality of service and avoids unnecessary delay for the users.

The present invention improves on previous schemes by allocating the bandwidth among the various mobile stations which are currently connected to the base station. In order to do this, it is necessary for the base station to have some idea of the amount of data in the queue in the individual mobile stations. Prior art systems do not provide for this information to be given to the base station, nor are the resources allocated in real time based on this information.

Data which is sent from the mobile stations to the base station is arranged in blocks according to the protocol governing the apparatus. Thus, such blocks include not only the data itself, but identification information and other bits which may be used for other purposes such as error checking, etc. In particular, in the enhanced general packet data radio services system (EGPRS), there is provided a field of four bits which are known as the countdown value of the block. Under the current scheme, the bandwidth allocated to the mobile station is fixed and these four bits indicate the queue length of that mobile station. In particular, it indicates the number of data blocks in the queue as long at it is less than 16. This provides an estimate of when the current data transfer will be finished. However, this is not used in any manner to control the resources available.

In the present arrangement, these four bits instead provide an indication of the data in the queue so that the base station may determine if additional resources are necessary in order to move the data at the optimum speed. While the particular data included in the four bits may have various different meanings, the preferred arrangement is to let the values of 0-8 indicate the number of data segments in the queue. These values will indicate a queue length if it is less than or equal to the segment rate. This segment rate is the parameter which is established between the mobile station and the base station during the set up phase. If the queue length exceeds the segment rate, the values of 9-15 in the four bit field indicate the additional bandwidth which is required in order to meet the delay/rate requirement of the packet.

Thus, as the individual packets are sent from the mobile station to the base station, the base station examines this four bit field and notes the situation in the queue at that mobile station. If additional resources are necessary, the base station will allocate additional bandwidth to that connection so that the data stored in the queue will move faster. This of course assumes that sufficient resources are available to add resources to that connection. Clearly, the base station must consider all of the requests of all of the connections before allocating these resources. Since the four bit field is sent with every packet, the base station is constantly updated as to the situation in each mobile station. Accordingly, it can closely monitor the situation and adjust it over a very short time period to improve the utilization of its resources. This arrangement is much faster than the polling scheme because the information is provided in each packet without wasting bandwidth for the polling communications. Further, the present arrangement utilizes a four bit field which is already present according to the current protocols. It is only necessary to provide that the base station and mobile station each have a proper system for adding the data and using the data.

Figure 2 shows a block diagram of a mobile station 14. While the station is shown as including a number of circuits, in fact, these functions could also be performed by software in a processor. A data generator 20 produces the data which is to be transmitted by the mobile station. This can include any of the normal devices which are utilized in a mobile station to produce data including a microphone to produce voice data, a keyboard to produce alpha numeric data, a camera for producing video data, etc. The specific type of data generation is not critical to the operation of the present invention. However, no matter what type of data is produced, it is sent to a data queue 22 to await its transmission. A queue length measuring device 24 observes the amount of data in the queue and determines the queue length. This queue length information is sent to encoder 26 which determines the four bit code to place in the field based on the length of the queue. Thus, in the preferred system described above, if the queue is less than the segment rate, a value between zero and eight is encoded and if the queue length is greater than the segment rate a value between nine and fifteen is encoded. The exact value in either of these ranges depends on the length of the queue. Other schemes of encoding could easily be used also merely by changing the encoding scheme. Thus, it would be possible to use a queue length value only if preferred or only a value for additional bandwidth. Other values could also be utilized as long as they relate in some manner to the length of the queue and can be utilized in the base station to allocate the bandwidth appropriately. Obviously, some encoding schemes will provide better information and allow for more appropriate allocation of resources.

Once the four bit code has been generated, it is added to the data block in a combiner 28. Thus, the code is added to the data block only when it reaches the front of the line in the queue so that the most updated information about the length of the queue can be given. Alternatively, the code can be added based on the length of the queue when the data block enters the queue, but this information would be slightly less fresh. In this alternative arrangement, the combiner would make the combination as the data enters the queue. In either case, when the packet is ready for transmission, it is sent to transmitter 30 so as to be connected to the base station through antenna 32.

As shown in Figure 3, base station 12 includes an antenna 34 and receiver 36 which receive the packet transmitted from antenna 32. Of course, this antenna and receiver are in communication with several mobile stations at the same time. For simplicity of discussion, it will, however, be discussed as if only a single mobile station were connected at a time. The receiver 36 forwards the received data onto signal processor 38 for further handling of the data and eventual connection of the data to output lines 40. However, decoder 42 looks at the data signal and determines the code in the four bit field which represents the queue length information. This decoder then provides the queue length information for the associated mobile station to the resource controller 44. The resource controller determines the situation in the data queue in the associated mobile station and determines whether additional resources should be allocated to that mobile station connection and if the resources are available. The controller obviously must prioritize the needs of the various stations in view of the resources available and distribute them in the most effective manner. This controller then determines the various bandwidth resources available for each mobile station and controls the receiver to arrange this. The actual decision process as to how to allocate the resources based on this information may vary. It may take into consideration the importance of the information, its time sensitivity, the importance of the particular user, or other factors in addition to the amount of data in each station. However, the allocation should be such as to give the best quality of service to as many stations as possible. However, the simple manner of making this choice is merely to allocate the most resources to the station with the largest queue without lowering the segment rate which has been guaranteed. Just as in the mobile stations, the various circuitry indicated for the base station may actually be hardwired devices or may be programmed functions of a processor.

In a preferable system, the real time data packet is split into data segments for the purpose of transmission. In packet cellular systems, data segments correspond to a radio link control/multiple access control (RLC/MAC) block, which is a layer 2 data block. Each data segment is transmitted individually over the transmission media when the opportunity is granted. A transmission opportunity is defined as any method used to transport a data segment on the transmission media. For example, in a time division multiple access system (TDMA) the transmission opportunity is a time slot and in a wideband code division multiple access (WCDMA) system it is the utilization of a unique WALSH code in a radio frame. The radio frame is shared by multiple users using different WALSH codes. The base station schedules the data packets and organizes the transmission opportunities for current user traffic. The present invention presents a model that will help the scheduling in the base station to provide for optimum service for all users in the uplink direction. Traffic information is sent in each block in the uplink. By including this information in one field of the block, real time information is provided to enable better scheduling.

While this arrangement has been described in terms of a wireless connection between a mobile station and a base station, it could also be applied to other systems where the connections are made by wire, fiber optic cable, etc. The only requirement is that the queue length information can be sent with the data block and that the resources can be allocated based on this data.

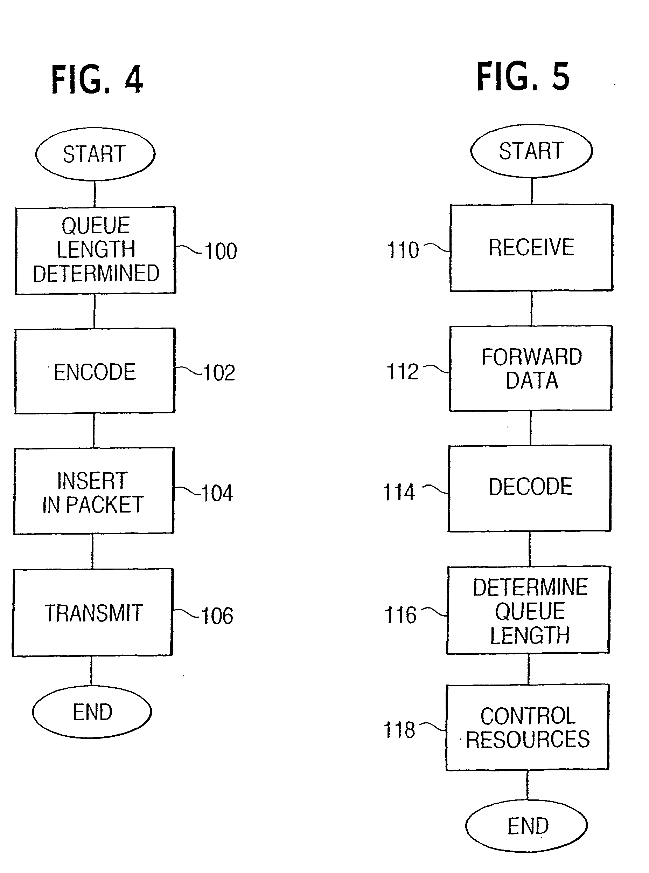

The method of operation of this system is seen in the flow charts of Figures 4 and 5. Figure 4 relates to the method of determining the queue length and encoding the four bit field in the mobile station. In step 100, the data queue length is determined. In step 102 the determined length is converted to a four bit code which is related to the queue length. This code is inserted in the data packet in step 104. The packet is then transmitted in step 106.

Figure 5 shows the method of utilizing this information in the base station. In step 110, the signal from a particular mobile station is received. In step 112 the data is forwarded. In step 114 a decoder receives the encoded four bit field and decodes it. In step 116 the resource controller receives the decoded information and determines the length of the queue. In step 118, the resources are based on this information.

Numerous additional modifications and various of the present invention are possible in light of the above teachings. It is therefore to be understood that within the scope of the appended claims, the invention may be practiced otherwise than is specifically described herein.

## Claims

1. A method of controlling communication resources in a transmission from a first network element (14) to a second network element (12), where the communication resources are allocated by a controller (44), comprising:
monitoring a length of data queue (22) in the first network element (44) as an indication of future need of communication resources in said first network element (44),
sending the indication from the first network element (14) to the controller (44), wherein the indication is a coded value of the length of the data queue (22); and
controlling the communication resources by adjusting the allocation of communication resources between the first network element (14) and the second network element (12) based on this indication.

2. The method according to claim 1, wherein the first network element (14) is connected to the controller (44) by way of the second network element (12).

3. The method according to claim 1, wherein the indication includes information about a transmit buffer of the first network element (14).

4. The method according to claim 1, wherein the indication includes information on the additional resources needed for said first network element (14).

5. The method according to claim 3, wherein the indication includes a quantization scheme whose values correspond to predefined amounts of resources.

6. The method according to claim 4, wherein the indication includes information about a transmit buffer of the first network element (14).

7. A method according to claim 1, wherein the first network element (14) is a mobile station and the second network element (12) is a base station of a wireless communication network (10).

8. A system for controlling communication resources in a network (10), comprising:
a plurality of first station (14), a second station (12) connected to said plurality of first stations (14) through a plurality of communication links;
a controller (44) for controlling the allocation of said communication resources among said links;
said allocation being performed in accordance with information transmitted from said first stations (14) which indicates a need for communication resources based upon the
lengths of data queues (22) in the first stations (14), wherein the information is a coded value of
the lengths of the data queues (22).

9. The system according to claim 8, wherein said controller (44) is part of said second station (12).

10. The system according to claim 8, wherein said first stations (14) are mobile stations and said second (12) is a base station in a wireless network (10).

11. The system according to claim 8, wherein each of said plurality of first stations (14) includes:
a data generator (20);
a data queue (22);
an encoder (26) for generating a code representative of the length of the data queue (22);
a transmitter (30) for transmitting said data with said code included therein as a field.

12. The system according to claim 8, wherein said second station (12) includes:
a receiver (36) receiving a transmission and producing data;
a decoder (42) for decoding a field of said data and producing an indication of the data queue (22) in an associated first station (14);
wherein said controller (44) is arranged to receive said information from said decoder (42) and to allocate communication resources in accordance therewith.

13. The system according to claim 8, wherein said indication is provided for each data block transmitted.

## Patentansprüche

1. Verfahren zum Steuern von Kommunikationsressourcen in einer Übertragung von einem ersten Netzwerkelement (14) zu einem zweiten Netzwerkelement (12), wobei die Kommunikationsressourcen durch eine Steuervorrichtung (44) zugewiesen werden, umfassend:
Überwachen einer Länge einer Datenqueue (22) in dem ersten Netzwerkelement (14) als eine Angabe für zukünftigen Bedarf an Kommunikationsressourcen in dem ersten Netzwerkelement (14);
Senden der Angabe von dem ersten Netzwerkelement (14) an die Steuervorrichtung (44), wobei die Angabe ein kodierter Wert der Länge der Datenqueue (22) ist; und
Steuern der Kommunikationsressourcen durch Anpassen der Zuweisung der Kommunikationsressourcen zwischen dem ersten Netzwerkelement (14) und dem zweiten Netzwerkelement (12) basierend auf dieser Angabe.

2. Verfahren gemäß Anspruch 1, wobei das erste Netzwerkelement (14) mit der Steuervorrichtung (44) mittels des zweiten Netzwerkelements (12) verbunden ist.

3. Verfahren gemäß Anspruch 1, wobei die Angabe eine Information über einen Übertragungspuffer des ersten Netzwerkelements (14) umfasst.

4. Verfahren gemäß Anspruch 1, wobei die Angabe eine Information über zusätzliche Ressourcen umfasst, die für das erste Netzwerkelement (14) benötigt werden.

5. Verfahren gemäß Anspruch 3, wobei die Angabe ein Quantisierungsschema umfasst, dessen Werte vorbestimmten Mengen an Ressourcen entsprechen.

6. Verfahren gemäß Anspruch 4, wobei die Angabe eine Information über einen Übertragungspuffer des ersten Netzwerkelements (14) umfasst.

7. Verfahren gemäß Anspruch 1, wobei das erste Netzwerkelement (14) eine Mobilstation ist und das zweite Netzwerkelement (12) eine Basisstation eines drahtlosen Kommunikationsnetzwerks (10) ist.

8. System zum Steuern von Kommunikationsressourcen in einem Kommunikationsnetzwerk (10), umfassend:
eine Vielzahl von ersten Stationen (14), eine zweite Station (12), die mit der Vielzahl erster Stationen (14) durch eine Vielzahl von Kommunikationsverbindungen verbunden ist;
eine Steuervorrichtung (44) zum Steuern der Zuweisung der Kommunikationsressourcen unter den Verbindungen;
wobei die Zuweisung gemäß einer von den ersten Stationen (14) übertragenen Information ausgeführt wird, die einen Bedarf für Kommunikationsressourcen basierend auf den Längen von Datenqueues (22) in den ersten Stationen (14) anzeigt,
wobei die Information ein kodierter Wert der Längen der Datenqueues (22) ist.

9. System gemäß Anspruch 8, wobei die Steuervorrichtung (44) ein Teil der zweiten Station (12) ist.

10. System gemäß Anspruch 8, wobei die ersten Stationen (14) Mobilstationen sind und die zweite Station (12) eine Basisstation in einem drahtlosen Netzwerk (10) ist.

11. System gemäß Anspruch 8, wobei jede der Vielzahl erster Stationen (14) umfasst:
einen Datengenerator (20);
eine Datenqueue (22);
einen Kodierer (26) zum Erzeugen eines Codes, der repräsentativ für die Länge der Datenqueue (22) ist;
einen Sender (30) zum Übertragen der Daten mit dem Code, der darin als ein Feld enthalten ist.

12. System gemäß Anspruch 8, wobei die zweite Station (12) umfasst:
einen Empfänger (36) zum Empfangen einer Übertragung und erzeugender Daten;
einen Dekodierer (42) zum Dekodieren eines Felds der Daten und Erzeugen einer Angabe der Datenqueue (22) in einer zugeordneten ersten Station (14);
wobei die Steuervorrichtung (44) angeordnet ist, die Information von dem Dekodierer (42) zu empfangen und Kommunikationsressourcen demgemäß zuzuweisen.

13. System gemäß Anspruch 8, wobei die Angabe für jeden übermittelten Datenblock bereitgestellt wird.

## Revendications

1. Procédé de commande de ressources de communication dans une transmission depuis un premier élément de réseau (14) à un deuxième élément de réseau (12), où les ressources de communication sont attribuées par un dispositif de commande (44), comprenant:
surveiller une longueur de file d'attente de données (22) dans le premier élément de réseau (14) comme une indication d'un besoin futur de ressources de communication dans ledit premier élément de réseau (14) ;
envoyer l'indication depuis le premier élément de réseau (14) au dispositif de commande (44), où l'indication est une valeur codée de la longueur de la file d'attente de données (22) ; et
commander les ressources de communication en ajustant l'attribution de ressources de communication entre le premier élément de réseau (14) et le deuxième élément de réseau (12) sur la base de cette indication.

2. Procédé selon la revendication 1, dans lequel le premier élément de réseau (14) est connecté au dispositif de commande (44) par le biais du deuxième élément de réseau (12).

3. Procédé selon la revendication 1, dans lequel l'indication inclut de l'information à propos d'un tampon de transmission du premier élément de réseau (14).

4. Procédé selon la revendication 1, dans lequel l'indication inclut de l'information sur les ressources additionnelles nécessaires pour ledit premier élément de réseau (14).

5. Procédé selon la revendication 3, dans lequel l'indication inclut un schéma de quantification dont les valeurs correspondent à des quantités prédéfinies de ressources.

6. Procédé selon la revendication 4, dans lequel l'indication inclut de l'information à propos d'un tampon de transmission du premier élément de réseau (14).

7. Procédé selon la revendication 1, dans lequel le premier élément de réseau (14) est une station mobile et le deuxième élément de réseau (12) est une station de base d'un réseau de communication sans fil (10).

8. Système pour commander des ressources de communication dans un réseau (10), comprenant:
une pluralité de premières stations (14), une deuxième station (12) connectée à ladite pluralité de premières stations (14) à travers une pluralité de liaisons de communication;
un dispositif de commande (44) pour commander l'attribution desdites ressources de communication parmi lesdites liaisons;
ladite attribution étant effectuée conformément à de l'information transmise depuis lesdites premières stations (14) qui indique un besoin pour des ressources de communication basé sur les longueurs de files d'attente de données (22) dans les premières stations (14), où l'information est une valeur codée des longueurs des files d'attente de données (22).

9. Système selon la revendication 8, dans lequel ledit dispositif de commande (44) fait partie de ladite deuxième station (12).

10. Système selon la revendication 8, dans lequel lesdites premières stations (14) sont des stations mobiles et ladite deuxième station (12) est une station de base dans un réseau sans fil (10).

11. Système selon la revendication 8, dans lequel chacune de ladite pluralité de premières stations (14) inclut:
un générateur de données (20) ;
une file d'attente de données (22) ;
un codeur (26) pour générer un code représentatif de la longueur de la file d'attente de données (22) ;
un transmetteur (30) pour transmettre lesdites données avec ledit code inclus dans celles-ci comme un champ.

12. Système selon la revendication 8, dans lequel ladite deuxième station (12) inclut :
un récepteur (36) pour recevoir une transmission et produire des données ;
un décodeur (42) pour décoder un champ desdites données et produire une indication de la file d'attente de données (22) dans une première station associée (14) ;
où ledit dispositif de commande (44) est agencé pour recevoir ladite information depuis ledit décodeur (42) et pour attribuer des ressources de communication en conformité avec celui-ci.

13. Système selon la revendication 8, dans lequel ladite indication est fournie pour chaque bloc de données transmis.
